# EUROPEAN PATENT SPECIFICATION

(11) **EP 1 757 962 B1**
(45) Date of publication and mention of the grant of the patent: **09.10.2013**
(21) Application number: 06013275.0
(22) Date of filing: 27.06.2006
(51) Int. Cl.: G02B 6/00, G02F 1/13357

(54) **ILLUMINATION SYSTEM FOR FLAT PANEL DISPLAY DEVICE**
BELEUCHTUNGSSYSTEM FÜR EINE FLACHTAFEL-BILDANZEIGEVORRICHTUNG
SYSTEME D'ECLAIRAGE POUR DISPOSITIF D'AFFICHAGE A ECRAN PLAT

(30) Priority: 27.08.2005 KR 20050079127
(43) Date of publication of application: 28.02.2007
(73) Proprietor: Samsung Display Co., Ltd., Yongin-City, Gyeonggi-Do (KR)
(72) Inventor: Lee, Moon-gyu, Yeongtong-dong Yeongtong Suwon Gyeonggi (KR); Nam, Seung-ho, Bundang-gu Seongnam-si Gyeonggi-do (KR); Hwang, Seong-mo, Bundang-gu Seongnam-si Gyeonggi-do (KR); Kim, Young-chan, Yeongtong-gu Suwon-si Gyeonggi-do (KR); Wee, Dong-ho, Gunpo-si Gyeonggi-do (KR); Kim, Kyung-yeup, Giheung-gu Yongin-si Gyeonggi-do (KR)
(74) Representative: Grünecker, Kinkeldey, Stockmair & Schwanhäusser

(56) References cited:
- EP-A1- 1 031 872
- WO-A-01/90637
- WO-A-97/22834
- JP-A- 6 331 824
- US-A- 5 587 816
- US-A- 5 854 697
- US-A1- 2003 058 383
- US-A1- 2004 109 244
- BLOM S M P ET AL: "TOWARDS A POLARIZED LIGHT-EMITTING BACKLIGHT: MICRO-STRUCTURED ANISOTROPIC LAYERS" JOURNAL OF THE SOCIETY FOR INFORMATION DISPLAY, SOCIETY FOR INFORMATION DISPLAY, SAN JOSE, US, vol. 10, no. 3, 2002, pages 209-213, XP009012351 ISSN: 1071-0922
- HUGO J CORNELISSEN(1) ET AL: "38.3: Polarized Light LCD Backlight Based on Liquid Crystalline Polymer Film: A New Manufacturing Process" 2004 SID INTERNATIONAL SYMPOSIUM. SEATTLE, WA, MAY 25 - 27, 2004, SID INTERNATIONAL SYMPOSIUM, SAN JOSE, CA : SID, US, 25 May 2004 (2004-05-25), pages 1178-1181, XP007011931
- APHONIN O A ET AL: "OPTICAL PROPERTIES OF STRETCHED POLYMER DISPERSED LIQUID CRYSTAL FILMS" LIQUID CRYSTALS, TAYLOR AND FRANCIS, ABINGDON, GB, vol. 15, no. 3, 1 September 1993 (1993-09-01), pages 395-407, XP000396377 ISSN: 0267-8292

## Description

### BACKGROUND OF THE INVENTION

### 1. Field of the Invention

The present invention relates to an illumination system for a flat panel display device, and more particularly, to an illumination system for a flat panel display device in which incident light on a light guide plate from a light source disposed at a side of the illumination system is polarized to be emitted to the flat panel display device.

### 2. Description of the Related Art

Typically, a flat panel display devices include light emission type flat panel display devices and a light receiving type flat panel display devices. Liquid crystal displays (LCDs), which are a type of flat panel displays, are light receiving type displays that are not self-luminescent but form an image using incident light from the outside. Thus, an additional light source, for example, a backlight system is installed on a rear side of an LCD so as to observe an image in a dark place. Backlight systems for LCDs can be mainly classified into direct light emitting type backlight systems, and edge light emitting type backlight systems.

In the edge light emitting type backlight systems, since a linear light source is installed at an end, a light guide plate that guides light emitted from the light source uniformly to the rear side of an LCD panel is provided.

However, since the light emitted through the light guide plate in the conventional backlight system is nonpolar, it cannot be used in an LCD and needs to be polarized using a polarization unit. In this procedure, a considerable amount of the light energy is lost and the energy efficiency is reduced. Moreover, the lost light energy is changed into a form of thermal energy, causing problems such as overheating. Accordingly, it is a conventional assignment in the art to improve efficiency of an illumination system for providing polarized light.

Recently, illumination systems in which light of one polarization is separated and emitted in a light guide structure and light of another polarization is recycled, thereby improving efficiency have been suggested, as disclosed in U.S. Patent Nos. 5,845,035 and 5,808,709.

In an illumination system disclosed in U.S. Patent No. 5,845,035, polarization separation is performed by using total reflection of light of one polarization component generated by a refractive index difference at an interface between an optically isotropic layer and an optically anisotropic layer. However, since the refractive index difference at the interface is not large enough in actuality, as mentioned in U.S. Patent No. 5,808,709, a collimation unit that allows light to be incident on the light guide structure at an angle with which a total reflection condition at the interface is satisfied is required. If such collimation is insufficient, polarization separation is not well performed.

The document "Towards a polarized light-emitting backlight: micro-structured anisotropic layers", Journal of the Society for Information Display, Society for Information Display, San Jose, US, vol. 10, no. 3, 2002, pages 209-213, by Blom et al. discloses a back light for liquid crystal display illumination in which, s-polarized light is preferentially coupled out by micro-optical structures in a birefringent layer. The light guide is provided with light out-coupling microgrooves, which have been filled with birefringent polymer. This polymer has an ordinary index of refraction that closely matches the index of refraction of the light guide and an extraordinary index of refraction, which is as high as possible. In this way, one polarization state of light remains unaffected by the micro-grooves, while the orthogonal polarization is coupled out of the light guide.

The document US-A-5 587 816 discloses an illumination device having a polarized light separating sheet between a light guide and a LCD display. A retardation plate may be provided on the back face of the light guide in the form of a quarter wavelength plate.

### SUMMARY OF THE INVENTION

The present invention provides an illumination system for a flat pane display device in which polarization separation and recycling are perfonned in a light guide structure to improve energy efficiency and light of polarization is effectively separated and emitted without an additional collimation unit.

According to an aspect of the present invention, there is provided an illumination system for a flat panel display device according to claim 1.

Advantageous developments are defined in the dependent claims.

The polarization element having the same refractive index in both directions on the light guide plate and the upper layer (hereinafter referred to as a first polarized element) does not sense the interface but travels forward, and the polarization element having different refractive indices in both directions (hereinafter referred to as a second polarization element) selectively refracts, diffuses, or scatters on the interface, and a considerable portion of the second polarization element travels at an incidence angle smaller than the total reflection angle with respect to the upper surface of the upper layer, and is emitted to the outside.

The first polarization element is totally reflected inside the upper surface of the upper layer, and is recycled inside the light guide structure. The light guide plate is formed of optically isotropic material, however, substantially includes slight anisotropy. Accordingly, the totally reflected first polarization element gradually loses polarization as traveling inside the light guide plate, and is polarized and separated again while passing the polarization selection emitting structure repeatedly. Thus, the light incident on the light guide plate can be emitted as the second polarization element, thereby increasing the energy efficiency of the illumination system.

According to an illustrative example, there is provided an illumination system for a flat panel device comprising: a light source; a light guide plate allowing light emitted from the light source to be incident through a side to propagate and made of an optically isotropic material; and a light emitting layer having an optically isotropic matrix formed on a top surface of light guide plate and having the same refractive index as the light guide plate and a plurality of polarization sensitive scattering elements (PSSEs) which are an optically anisotropic material domain distributed in the matrix and aligned to have common optical directivity.

The polarization sensitive scattering elements (PSSEs) may have two different refractive indices, one of which is substantially the same as the refractive index of the matrix.

### BRIEF DESCRIPTION OF THE DRAWINGS

The above and other features and advantages of the present invention will become more apparent by describing in detail exemplary embodiments thereof with reference to the attached drawings in which:
FIG. 1 is a cross-sectional view of an illumination system having a micro lens array structure at an interface between a light guide plate and an upper layer according to an embodiment of the present invention;
FIG. 2 is a cross-sectional view of an illumination system having a polarization converter and a reflection mirror at a side of the light guide plate according to another embodiment of the present invention;
FIG. 3 is a cross-sectional view of an illumination system having a polarization converter and a reflection mirror on a bottom surface of the light guide plate according to another embodiment of the present invention;
FIG. 4 is a cross-sectional view of an illumination system having a non-periodic uneven structure at an interface of the light guide plate and an upper layer according to an illustrative example;
FIG. 5 is a cross-sectional view of an illumination system having a light emitting layer in which polarization sensitive scattering elements (PSSE) dispersed on a top surface of the light guide plate according to another illustrative example; and
FIG. 6 is a cross-sectional view for explaining an example of a light emitting layer having dispersed PSSEs according to another illustrative example.

### DETAILED DESCRIPTION OF THE INVENTION

The present invention will now be described more fully with reference to the accompanying drawings, in which exemplary embodiments of the invention are shown.

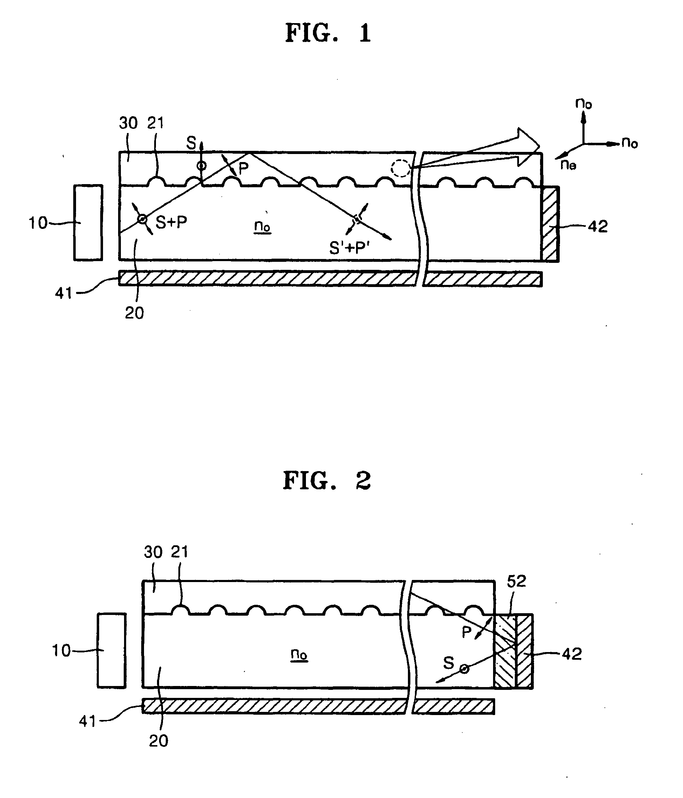

FIG. 1 is a cross-sectional view of an illumination system having a micro lens array structure on an interface between a light guide plate and an upper layer according to an embodiment of the present invention. The illumination system includes a light source 10 on at least one end and a light guide plate 20 for allowing light emitted from the light source 10 to be incident through. The illumination system further includes an upper layer 30 in a film or coating layer disposed on a top surface of the light guide plate 20.

The light guide plate 20 is formed of an optically isotropic material whose refractive index of no is regular regardless of directions. The upper layer 30 is formed of an optically anisotropic material whose refractive index of nₒ or nₑ varies according to directions. In other words, one of the refractive indices of the upper layer 30 is the same as the refractive index of the light guide plate 20, and the other is different. Also, a plane made by the two axes having the same refractive index of the upper layer 30 may be placed to be perpendicular to the light guide plate 20.

A fine, solid structure 21 is formed at the interface of the top surface of the light guide plate 20 and the bottom surface of the upper layer 30. The solid structure 21 may be formed of a fine, solid structure on the top surface of the light guide plate 20 and the upper layer 30 in a film shape bonded onto because it is easy to form a solid structure on the light guide plate 20 made of optically isotropic material actually.

The solid structure 21 has the shape, in which light can be selectively refracted, reflected, diffracted or scattered. The solid structure 21 is a bonding surface of a micro lens array structure formed on the top surface of the light guide plate 20 and the optically anisotropic film.

Furthermore, a reflection mirror 42 may be disposed on the other side of the light guide plate 20 on which the light source 10 is not disposed and a reflection mirror 41 may also be disposed on the bottom surface of the light guide plate 20.

The polarization selection emitting operation in the illumination system according to the present invention is as following. Non-polar light S+P incident on the light guide plate 20 arrives at the solid structure 21. The upper layer 30 has two refractive indices nₒ and nₑ, and one of them is the same as the refractive index nₒ of the light guide plate 20. Accordingly, a polarization component in direction in which refractive indices of both sides of the solid structure 21 are the same, that is, a first polarization component P, does not sense any difference of refractive indices, and thus passes the solid structure 21. A second polarization component S in direction in which refractive indices of both sides of the solid structure 21 are different, is refracted, reflected, diffracted, or scattered by the solid structure 21, and a considerable amount of the second polarization element S is emitted to a display panel (not shown) through the top surface of the upper layer 30.

When the first polarization element P arrives at the top surface of the upper layer 30, the first polarization element P is reflected totally by the difference between the refractive indices of inside and outside the solid structure and proceeds inside the light guide plate 20. As the light guide plate 20 is made of an optically isotropic material but is actually slightly anisotropic, the first polarization element P passes the side reflection mirror 42 and thus the polarized light S'+P' is depolarized to be separated in the polarization selection emitting structure 21 again, and thus most of the incident light is emitted as the second polarization element S.

The reflection mirror 41 disposed on the bottom surface of the light guide plate 20 reflects the second polarization element S which is not emitted to the top of the polarization selection emitting structure 21 but scattered to head for the display panel (not shown) above.

FIG. 2 is a cross-sectional view of an illumination system for a flat panel display device having a polarization converter and a reflection mirror at a side of a light guide plate according to another embodiment of the present invention. The embodiment of FIG. 2 is nearly the same as the embodiment of FIG. 1. There is only a difference in that a polarization converter 52 is disposed between a side of the light guide plate 20 and the reflection mirror 42. The polarization converter 52 rotates the polarization axis by 90 degree to convert it into perpendicularly polarized light, or depolarizes, and is usually made of an optically anisotropic material layer or in a predetermined optical structure. The polarization converter 52 may be a one fourth wavelength (λ/4) plate.

Referring to FIG. 2, when the first polarization component P that arrives at the side of the light guide plate 20 and sequentially passes the polarization converter 52, the reflection mirror 42, and the polarization converter 52 is reflected, the polarization axis is rotated, and at least a portion of the light is converted into the second polarization component S.

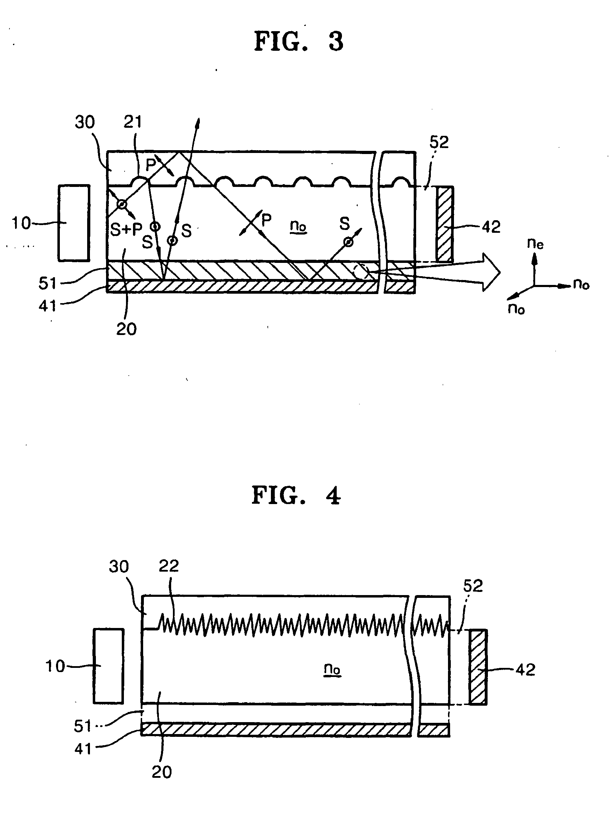

FIG. 3 is a cross-sectional view of an illumination system having a polarization converter and a reflection mirror below a light guide plate according to another embodiment of the present invention. The embodiment of FIG. 3 is nearly the same as the embodiment of FIG. 1 or 2. There is only a difference in that a polarization converter 51 is disposed between the bottom surface of the light guide plate 20 and the reflection mirror 41.

The polarization converter 51 rotates the optical axis while reflecting the first polarization element P which passes through the solid structure 21 and which is totally reflected on the top surface of the upper layer 30 and incident on the bottom surface of the light guide plate 20 again to the solid structure 21 to convert at least a portion of the light into the second polarization element S. Also, the polarization converter 51 allows the second polarization element S which is refracted downward and incident on the bottom surface of the light guide plate 20 at a small angle, to be reflected without a polarization conversion.

The polarization converter 51 may be made of an optically anisotropic material layer or in a predetermined optical structure. The polarization converter 51 may be satisfactory when it can selectively rotate the optical axis of a light beam or proceed the light beam. The polarization converter 51 may be an optically anisotropic material layer having two different refractive indices, one of which corresponds to the two horizontal axes perpendicular to each other and the other of which corresponds to the vertical axis.

FIG. 4 is a cross-sectional view of an illumination system having a non-periodic uneven structure at an interface of a light guide plate and an upper layer according to an illustrative example. The example of FIG. 4 is nearly the same as one of the embodiments of FIGS. 1 through 3 except that a polarization selection emitting structure, that is, the solid structure, is disposed. The polarization selection emitting structure 22 in a periodic or non-periodic solid structure may be a hologram pattern, or a non-periodic fine uneven structure made using an etching method or a sand blust method.

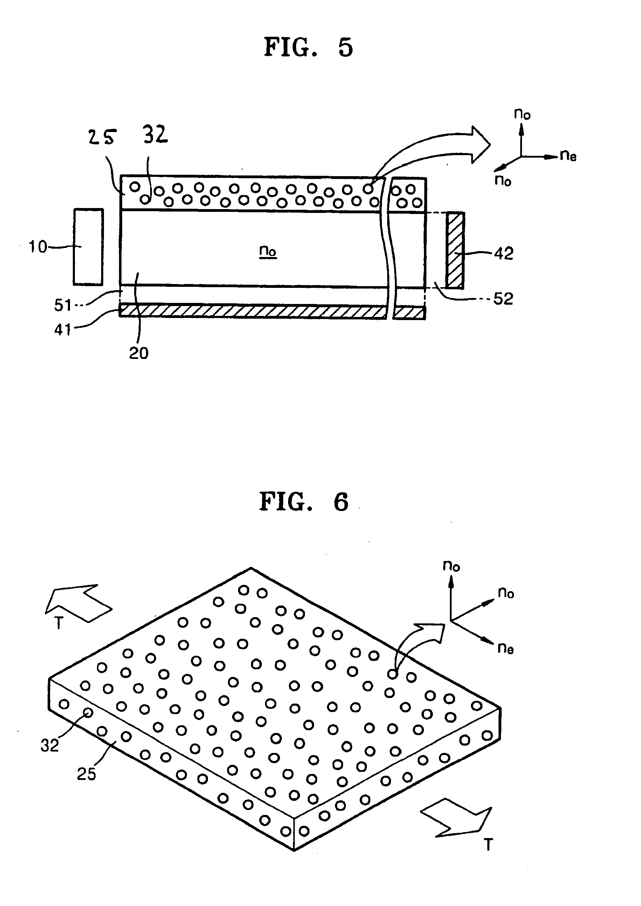

FIG. 5 is a cross-sectional view of an illumination system having polarization sensitive scattering elements (PSSE) dispersed on a top surface of the light guide plate according to another illustrative example. The light source 10, the light guide plate 20, bottom and side reflection mirrors 41 and 42, and the polarization converters 51 and 52, which can be selectively added, are almost the same as the illumination systems of FIGS. 1 and 3. The difference is that the top surface of the light guide plate 20 is planar without a solid structure, and there is a light emitting layer 25 in which PSSEs 32 are distributed on the light guide plate 20.

The light emitting layer 25 has a matrix made of an optically isotropic material and a plurality of PSSEs 32 which are the optical anisotropic material domain distributed in the matrix.

The matrix may preferably have the same refractive index as the refractive index no of the light guide plate 20, and may have a refractive index to some extent greater than the refractive index nₒ of the light guide plate 20. The PSSEs 32 have two different refractive indices nₒ and nₑ, and one of the refractive indices is substantially the same as the refractive index of the matrix. The PSSEs 32 are aligned along a predetermined direction to have common optical directivity. For example, the PSSEs 32 can be aligned in the direction marked in the upper part of FIG. 5 to have two different refractive indices.

In the polarization and recycling operation of the light guide plate 20 and the light emitting layer 25, the second polarization element having the difference of refractive index with the matrix and the PSSEs 32 causes scattering on the interface of the matrix and the PSSEs 32, and the first polarization element which does not sense the difference of the refractive index passes the interface and is totally reflected on an interface with the exterior of the matrix to be recycled. This is the same as in the embodiment of FIGS. 1 through 3 and the example of FIG. 4.

The second polarization element scattered by the PSSE 32 is incident directly or via the bottom reflection mirror 41 at a smaller incident angle on the interface of the matrix and the exterior and emitted to the outside. The first polarization element is repeatedly reflected totally and proceeds inside the matrix and the light guide plate 20, is depolarized by a slight optical anisotropy or by the polarization converter 51 or 52 and is polarized again in the above described manner.

The PSSEs 32 may be made of various materials having optical anisotropy, for example, a liquid crystal. That is, the light emitting layer 25 may be a polymer dispersed liquid crystals (PDLC) in which a liquid domain is dispersed in a transparent polymer matrix and aligned along a predetermined direction.

FIG. 6 is a cross-sectional view for explaining an example of a light emitting layer having aligned PSSEs. The light emitting layer 25 may be made of a matrix, of which the refractive index is not substantially changed with respect to tensile deformation and PSSEs 32, the refractive index of which is changed by tensile strain. Specifically, the PSSEs 32 may be polyethylenenaphthalate (PEN) and the matrix may be co-PEN.

When tension T is applied to such a film, a light emitting layer 25 having the PSSEs which are aligned by the tension T can be obtained, and a desired light guide structure can be obtained by bonding the light emitting layer 25 in a tensed state on the top surface of the light guide plate 20.

In the illumination system for a flat panel display device according to the present invention, energy efficiency is improved using a light guide structure in which light generated from a light source at an end of the illumination system is radiated uniformly on the display panel and one polarization component is separated and emitted and the other polarization component is recycled in the light guide structure.

Furthermore, light incident on the light guide structure can be efficiently separated without additional collimation unit.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. An illumination system for a flat panel display device comprising:
a light source (10);
a light guide plate (20) allowing light emitted from the light source (10) to be incident through a side to propagate and made of an optically isotropic material;
an upper layer (30) disposed on a top surface of the light guide plate (20) and made of an optically anisotropic material having two different refractive indices, one of which is the same as the refractive index of the light guide plate (20); and
a polarization selection emitting structure (21) which is formed at an interface of the light guide plate (20) and the upper layer (30) and in which different polarization components in perpendicular directions are refracted, reflected, diffracted, or scattered to different degrees;
wherein the upper layer (30) is made of optically anisotropic film having two different refractive indices planarly and the polarization selection emitting structure (21) is formed of a bonded surface of a fine solid structure formed on a top surface of the light guide plate (20) and the optically anisotropic film;
**characterized in that**
the fine solid structure comprises a non-periodic fine uneven structure.

2. The illumination system of claim 1, wherein the non-periodic fine uneven structure is formed using an etching method or a sand blast method.

3. The illumination system of one of claims 1 to 2, wherein a reflection mirror (41, 42) is formed on a bottom surface of the light guide plate (20) and/or on the side of the light guide plate (20) opposite to the light source (10).

4. The illumination system of claim 3, wherein a polarization converter (51, 52) made of an optically anisotropic material is disposed between the light guide plate (30) and the reflection mirror (42).

5. The illumination system of claim 4, wherein the polarization converter (51, 52) has two different refractive indices, one of which corresponds to the two horizontal axes perpendicular to each other and the other of which corresponds to the vertical axis.

## Patentansprüche

1. Beleuchtungssystem für eine Flachbildschirm-Anzeigevorrichtung, das umfasst:
eine Lichtquelle (10);
eine Lichtleitplatte (20), die von der Lichtquelle (10) emittiertes Licht über eine Seite auftreffen und sich ausbreiten lässt und die aus einem optisch isotropen Material besteht;
eine obere Schicht (30), die an einer oberen Fläche der Lichtleitplatte (20) angeordnet ist und aus einem optisch anisotropen Material besteht, das zwei verschiedene Brechungsindizes hat, von denen einer der gleiche ist wie der Brechungsindex der Lichtleitplatte (20);
und
eine Polarisationsauswahl-Emittierstruktur (21), die an einer Grenzfläche der Lichtleitplatte (20) und der oberen Schicht (30) ausgebildet ist und in der unterschiedliche Polarisationskomponenten in zueinander senkrechten Richtungen in unterschiedlichen Graden gebrochen, reflektiert, gebeugt oder gestreut werden;
wobei die obere Schicht (30) aus optisch anisotropem Film mit zwei unterschiedlichen Brechungsindizes plan ausgebildet ist und die Polarisationsauswahl-Emittierstruktur (21) aus einer gebundenen Fläche einer feinen Festkörperstruktur besteht, die an einer oberen Fläche der Lichtleitplatte (20) und dem optisch anisotropen Film ausgebildet ist;
**dadurch gekennzeichnet, dass**
die feine Festkörperstruktur eine nichtperiodische feine unebene Struktur umfasst.

2. Beleuchtungssystem nach Anspruch 1, wobei die nichtperiodische feine unebene Struktur mit einem Ätzverfahren oder einem Sandstrahlverfahren ausgebildet wird.

3. Beleuchtungssystem nach einem der Ansprüche 1 bis 2, wobei ein Reflektionsspiegel (41, 42) an einer unteren Fläche der Lichtleitplatte (20) und/oder an der der Lichtquelle (10) gegenüberliegenden Seite der Lichtleitplatte (20) ausgebildet ist.

4. Beleuchtungssystem nach Anspruch 3, wobei ein Polarisationswandler (51, 52), der aus einem optisch anisotropen Material besteht, zwischen der Lichtleitplatte (30) und dem Reflektionsspiegel (42) angeordnet ist.

5. Beleuchtungssystem nach Anspruch 4, wobei der Polarisationswandler (51, 52) zwei unterschiedliche Brechungsindizes hat, von denen einer den zwei zueinander senkrechten horizontalen Achsen entspricht und der andere der vertikalen Achse entspricht.

## Revendications

1. Système d'éclairage pour un dispositif d'affichage à écran plat, comprenant :
- une source lumineuse (10) ;
- une plaque de guidage de lumière (20) permettant à la lumière émise par la source lumineuse (10) d'être incidente par un côté pour se propager et faite en un matériau optiquement isotrope ;
- une couche supérieure (30) disposée sur la surface supérieure de la plaque de guidage de lumière (20) et faite en un matériau optiquement anisotrope ayant deux indices de réfraction différents, dont l'un a le même indice de réfraction que la plaque de guidage de lumière (20) ; et
- une structure émettrice d'une sélection de polarisation (21) qui est formée à une interface de la plaque de guidage de lumière (20) et de la couche supérieure (30) et dans laquelle différentes composantes de polarisation dans des directions perpendiculaires sont réfractées, réfléchies, diffractées ou dispersées à différents degrés ;
- dans lequel la couche supérieure (30) est faite en un film optiquement anisotrope ayant deux indices de réfraction différents de manière planaire et la structure émettrice d'une sélection de polarisation (21) est formée d'une surface collée d'une structure solide fine formée sur la surface supérieure de la plaque de guidage de lumière (20) et le film optiquement anisotrope ;
- **caractérisé en ce que** la structure solide fine comprend une structure irrégulière fine non-périodique.

2. Système d'éclairage selon la revendication 1, dans lequel la structure irrégulière fine non-périodique est formée en utilisant un procédé de gravure chimique ou un procédé de sablage au jet.

3. Système d'éclairage selon l'une des revendications 1 à 2, dans lequel un miroir de réflexion (41, 42) est formé sur une surface inférieure de la plaque de guidage de lumière (20) et/ou sur le côté de la plaque de guidage de lumière (20) opposé à la source lumineuse (10).

4. Système d'éclairage selon la revendication 3, dans lequel un convertisseur de polarisation (51, 52) fait en un matériau optiquement anisotrope est disposé entre la plaque de guidage de lumière (30) et le miroir de réflexion (42).

5. Système d'éclairage selon la revendication 4, dans lequel le convertisseur de polarisation (51, 52) a deux indices de réfraction différents, dont l'un correspond aux deux axes horizontaux perpendiculaires l'un à l'autre et l'autre correspond à l'axe vertical.
